# EUROPÄISCHE PATENTSCHRIFT

(11) **EP 4 001 006 B1**
(45) Veröffentlichungstag und Bekanntmachung des Hinweises auf die Patenterteilung: **07.06.2023**
(21) Anmeldenummer: 20207988.5
(22) Anmeldetag: 17.11.2020
(51) Int. Cl.: B60P 1/273

(54) **VORRICHTUNG ZUR VERRIEGELUNG EINER BEHÄLTERKLAPPE**
DEVICE FOR LOCKING A TAILGATE OF A CONTAINER
DISPOSITIF DE VERROUILLAGE D'UN COUVERCLE DE RÉCIPIENT

(43) Veröffentlichungstag der Anmeldung: 25.05.2022
(73) Patentinhaber: Schmitz Cargobull AG, 48341 Altenberge (DE)
(72) Erfinder: Landefeld, Heiko, 99094 Erfurt (DE); Heinke, Christopher, 04600 Altenburg (DE)
(74) Vertreter: Liedtke & Partner Patentanwälte

(56) Entgegenhaltungen:
- DE-U1-202019 101 786
- GB-A- 713 103
- JP-A- S5 327 916
- JP-A- S5 470 515

## Beschreibung

Die Erfindung betrifft eine Vorrichtung zur Verriegelung einer Behälterklappe, einen Ladegutbehälter für ein Fahrzeug und ein Fahrzeug.

Aus der EP 2 590 838 B1 ist ein Kippkörper für Fahrzeuge mit einer Sicherheitsvorrichtung bekannt. Der Kippkörper umfasst ein Kippbett, das über Schwenkmittel zum Kippen des Kippbettes mit einem Fahrgestell verbunden ist. Weiterhin umfasst der Kippkörper an einem Punkt, der von den Schwenkmitteln beabstandet ist, Mittel zur lösbaren Blockierung des Kippens, die automatisch eingeführt werden, wenn das Kippbett auf das Fahrgestell abgesenkt wird. Die Mittel umfassen zur lösbaren Blockierung des Kippens einen Blockierhaken, der integral mit dem Kippbett ausgebildet ist und an einer äußeren Krümmung einen Abschnitt hat, der nach unten geneigt ist. Der Kippkörper umfasst weiterhin einen Freisetzungszylinder, der mit einem Kopplungselement verbunden ist, welches drehgelenkig mit dem Fahrgestell verbunden ist zum Zwecke seiner Oszillation mit Bezug auf den Blockierhaken. Der Blockierhaken wird von einem Hydraulikkreis betätigt, der von einer Hydraulikpumpe versorgt wird und mit einem Folgeventil zur Betätigung des Kopplungselements vor einer Betätigung eines Hubkolbens des Kippbettes ausgestattet ist. Das Kopplungselement ist drehgelenkig mit dem Fahrgestell verbunden zum Zwecke seiner Oszillation im Kontrast zu einer Rückstellfeder, die dazu dient, es in Eingriff mit dem Blockierhaken zu halten.

Aus der DE 203 19 167 U1 ist ein Transportbehälteraufbau für ein Lastentransportfahrzeug mit einer Kippbrücke bekannt. Die Kippbrücke ist schwenkbar um eine erste Schwenkachse zwischen einer ersten Stellung, in der die Kippbrücke nicht verkippt ist, und einer zweiten Stellung, in der die Kippbrücke verkippt ist, gelagert. Die Kippbrücke weist einen Bordboden und eine Bordwandklappe auf, die schwenkbar um eine zweite Schwenkachse zwischen einer Schließstellung, in der die Bordwandklappe geschlossen ist, und einer Öffnungsstellung, in der die Bordwandklappe geöffnet ist, gelagert ist. Weiterhin ist ein Verriegelungselement zum Verriegeln der Bordwandklappe in ihrer Schließstellung vorgesehen. Der Bordboden weist eine Öffnung auf, wobei die Öffnung in dem Bordboden derart platziert und das Verriegelungselement derart angeordnet ist, dass es in der ersten Stellung der Kippbrücke durch die Öffnung nach oben ragt und die Bordwandklappe in ihrer Schließstellung derart hintergreift, dass sie verriegelt ist.

Die DE 296 06 524 U1 beschreibt eine Vorrichtung zur Verriegelung einer für eine Öffnung schwenkbaren Rückwand in ihrer Schließstellung von Kippmulden an Lastkraftwagen, wobei die Vorrichtung aus einem unterhalb des Bodens der Kippmulde gelagerten und über eine Zugstange durch eine Öffnung des Bodens gegen die Rückwand schwenkbaren Verriegelungskörper besteht. Der Verriegelungskörper besitzt einen in Bezug auf seine Schwenkachse auf einer Kreisbahn verlaufenden Verriegelungsarm, wobei die Öffnung im Boden der Kippmulde den Verriegelungsarm mit einem für die Schwenkbewegung ausreichendem Spiel umschließt und eine Endfläche des Verriegelungsarmes in einer unwirksamen Stellung des Verriegelungskörpers mit der oberen Fläche der Öffnung im Boden fluchtet. Zum Verschwenken des Verriegelungsarmes zum Entriegeln der Rückwand ist an dem Verriegelungskörper ein Hebel mit einem Ende gelenkig angeschlossen, dessen anderes Ende schwenkbar an einen Arm eines Doppelhebels gelenkig angeschlossen ist. Der Doppelhebel ist um eine Achse schwenkbar. An den anderen Arm des Doppelhebels greift eine Zugstange an, die für die Entriegelungsbewegung auf Druck beansprucht wird. Diese Zugstange steht unter der Kraft einer Feder, die ständig das Bestreben hat, die Zugstange in Richtung eines hinteren Endes des Bodens zu bewegen. Mit Abstand von der Verriegelungsvorrichtung ist unterhalb der Bodenplatte des Bodens zwischen zwei Spanten ein Hebel angeordnet, der um eine Achse schwenkbar ist. Dieser Hebel liegt in einer Stellung des Verriegelungskörpers an einer ortsfesten Platte des Fahrgestells des Lastkraftwagens an. An diesen Hebel ist die Zugstange mit ihrem anderen Ende angeschlossen. Durch die vorgespannte Feder hat die Zugstange ständig das Bestreben, den Hebel nach unten von der Bodenplatte weg zu verschwenken, was jedoch durch eine Platte verhindert ist. Sobald die Kippmulde aus einer unteren Lage in eine gekippte Lage geschwenkt wird, entfernt sich der Hebel von der Platte und die vorgespannte Feder ist in der Lage, den Hebel nach unten von der Bodenplatte weg und damit den Verriegelungskörper in Richtung des hinteren Endes des Bodens zu verschwenken. Damit ist die Rückwand entriegelt.

Aus der DE 20 2019 101786 U1 ist eine Vorrichtung gemäß dem Oberbegriff des Anspruchs 1 bekannt.

Ferner beschreibt die EP 1 721 780 B1 einen Kippaufbau für ein Kipperfahrzeug, umfassend eine Basis und einen um eine normalerweise horizontale Kippachse zwischen einer Fahrgrundstellung und einer Maximalkippstellung relativ zur Basis kippbaren Lastentransportbehälter mit einem Behälterboden und Behälterwänden, von denen eine um eine oberhalb der Kippachse verlaufende und zur Kippachse im Wesentlichen parallele Schwenkachse schwenkbeweglich hängend gelagert ist. Somit ist diese Behälterwand aus einer den Lastentransportbehälter an einer Seite verschließenden Schließstellung heraus in eine Öffnungsstellung verschwenkbar, wenn der Lastentransportbehälter aus seiner Fahrgrundstellung heraus in eine Kippstellung verkippt wird. Weiterhin ist eine Verriegelungseinrichtung zur Sicherung der schwenkbaren Behälterwand in deren Schließstellung vorgesehen, wobei die Verriegelungseinrichtung eine Riegelanordnung aufweist, die in der Fahrgrundstellung des Lastentransportbehälters eine Behälterbodenöffnung durchsetzt und die in Schließstellung befindliche schwenkbare Behälterwand an deren unterem Rand hintergreift. Dabei weist die Riegelanordnung ein an der Basis des Kippaufbaus angeordnetes erstes Riegelelement und ein an dem Lastentransportbehälter angeordnetes zweites Riegelelement auf, wobei das zweite Riegelelement zwischen einer Verriegelungsstellung, in der es über die Behälterbodenöffnung hinaus nach oben absteht und die schwenkbare Behälterwand in deren Schließstellung verriegelnd hintergreifen kann, und einer Neutralstellung, in der es zur Behälterbodenöffnung hin zurückgezogen ist und den Öffnungsquerschnitt der Behälterbodenöffnung verschließt, schwenkbar ist. Dabei ist das erste Riegelelement dazu eingerichtet ist, das zweite Riegelelement in die Verriegelungsstellung zu verdrängen, wenn der Lastentransportbehälter aus einer Kippstellung heraus in die Fahrgrundstellung bewegt wird. Das zweite Riegelelement ist dazu eingerichtet, in die Neutralstellung überzugehen, wenn es beim Kippen des Lastentransportbehälters aus der Fahrgrundstellung heraus von dem ersten Riegelelement freikommt.

Der Erfindung liegt die Aufgabe zu Grunde, eine gegenüber dem Stand der Technik verbesserte Vorrichtung zur Verriegelung einer Behälterklappe an einem kippbaren Ladegutbehälter für ein Fahrzeug, einen verbesserten Ladegutbehälter für ein Fahrzeug und ein verbessertes Fahrzeug anzugeben.

Die Aufgabe wird erfindungsgemäß gelöst durch eine Vorrichtung, welche die im Anspruch 1 angegebenen Merkmale aufweist, durch einen Ladegutbehälter, welcher die im Anspruch 14 angegebenen Merkmale aufweist, und durch ein Fahrzeug, welches die im Anspruch 15 angegebenen Merkmale aufweist.

Vorteilhafte Ausgestaltungen der Erfindung sind Gegenstand der Unteransprüche.

Die erfindungsgemäße Vorrichtung zur Verriegelung einer Behälterklappe an einem um eine Kippachse kippbaren Ladegutbehälter für ein Fahrzeug umfasst zumindest einen Verriegelungshaken, welcher schwenkbar um eine beispielsweise parallel zur Kippachse angeordnete Hakenschwenkachse ausgebildet ist und einen Verriegelungsabschnitt aufweist, welcher in einem geschlossenen Zustand des Verriegelungshakens zur Anlage an der Behälterklappe ausgebildet ist und die Behälterklappe so verriegelt und in einem geöffneten Zustand die Behälterklappe zu einem Schwenken freigibt. Die Vorrichtung umfasst weiterhin ein Blockierelement, welches in einer Blockierposition den Verriegelungshaken in seinem geschlossenen Zustand blockiert und in einer geöffneten Position den Verriegelungshaken zum Schwenken um die Hakenschwenkachse freigibt. Ferner umfasst die Vorrichtung ein Wegausgleichelement, welches die Kippachse und den Verriegelungshaken mittelbar oder unmittelbar derart verbindet, dass bei einem Kippen des Ladegutbehälters aus einer ungekippten Position in eine gekippte Position und bei in der geöffneten Position befindlichem Blockierelement ein von der Kippachse ausgeführter Weg derart auf den Verriegelungshaken übertragen wird, dass dieser öffnet. Bei einem Kippen des Ladegutbehälters aus der ungekippten Position in die gekippte Position und bei in der Blockierposition befindlichem Blockierelement wird der von der Kippachse ausgeführte Weg vom Wegausgleichelement ausgeglichen.

Mittels der Vorrichtung kann in einfacher und zuverlässiger Weise bei einem Kippvorgang des Ladegutbehälters ein Öffnen des Verriegelungshakens derart gesperrt werden, dass die Behälterklappe trotz gekippter Position vom Verriegelungshaken verriegelt ist. Eine zusätzliche Verriegelung ist dabei nicht erforderlich, woraus eine signifikante Material- und Kosteneinsparung resultiert. Dabei ist eine Entladung des Ladegutbehälters durch eine Öffnung, welche nicht von der Behälterklappe verschlossen ist, möglich. Eine solche Öffnung ist beispielsweise eine in der Behälterklappe selbst befindliche und von einem anderen Verschlusselement verschlossene Öffnung, beispielsweise ein so genannter Getreideschieber. Hierbei ermöglicht der Aufbau der Vorrichtung mit dem Wegausgleichelement, dass die Vorrichtung vollständig am Ladegutbehälter befestigt ist. Eine Befestigung an einem den Ladegutbehälter tragenden Chassis oder Rahmen ist nicht erforderlich. Somit kann die Vorrichtung sehr kleinbauend mit geringer Länge, insbesondere in einen Bereich zwischen Kippachse und unterem Ende der Behälterklappe angeordnet werden.

In einer möglichen Ausgestaltung der Vorrichtung umfasst diese zumindest einen um eine parallel zur Kippachse verlaufende Hebelschwenkachse schwenkbaren Hebel, wobei ein Aufnahmeelement der Hebelschwenkachse an der Kippachse des Ladegutbehälters befestigt ist. Eine solche direkte Anbindung des Hebels bzw. der Hebelschwenkachse unmittelbar an der Kippachse ermöglicht eine Verringerung von Abmessungen der Vorrichtung. In Abhängigkeit einer Ausformung des Hebels ermöglicht dieser eine Anordnung des Wegausgleichelements in einer gewünschten Position, um einen Bauraum in anderen Positionen freizuhalten bzw. für eine Anordnung anderer Bauteile vorzusehen.

In einer weiteren möglichen Ausgestaltung der Vorrichtung verbindet das Wegausgleichelement ein der Hebelschwenkachse abgewandtes Ende des Hebels und den Verriegelungshaken. Eine solche Anordnung des Wegausgleichelements ermöglicht einen einfachen Aufbau der Vorrichtung sowie eine einfache Montage, Demontage und einen einfachen Austausch des Wegausgleichelements und anderer Komponenten der Vorrichtung.

In einer weiteren möglichen Ausgestaltung der Vorrichtung ist das Wegausgleichelement Bestandteil des Hebels und ist zwischen einem hebelachsseitigen Ende und einem der Hebelschwenkachse abgewandten Ende des Hebels angeordnet. Bei einer solchen Ausbildung kann die Vorrichtung besonders kleinbauend ausgeführt werden.

In einer weiteren möglichen Ausgestaltung der Vorrichtung umfasst das Wegausgleichelement zumindest eine Feder, welche beispielsweise mechanisch, hydraulisch und/oder pneumatisch ausgebildet ist und welche den von der Kippachse oder vom Hebel ausgeführten Weg und eine dabei erzeugte Kraft zu einer Überführung in einen gespannten Zustand aufnimmt. Mittels der Feder kann dabei in einfacher und zuverlässiger Weise der Weg der Kippachse oder des Hebels ausgeglichen werden.

In einer weiteren möglichen Ausgestaltung der Vorrichtung ist die Feder in der ungekippten Position des Ladegutbehälters auf Zug belastet und in der gekippten Position des Ladegutbehälters zumindest bei in der Blockierposition befindlichem Blockierelement auf Druck belastet. Somit ist eine einfache Realisierung des Wegausgleichs bei besonders geringen Abmessungen der Feder und daraus resultierend der Vorrichtung realisierbar.

In einer weiteren möglichen Ausgestaltung der Vorrichtung ist der Hebel mechanisch mit einem Führungselement gekoppelt, welches bei dem Kippen des Ladegutbehälters ein Schwenken des Hebels um die Hebelschwenkachse bewirkt. Somit kann ein definiertes Verschwenken des Hebels beim Kippen des Ladegutbehälters bei gleichzeitig ausreichendem Zurücklegen eines Weges zu einer besonders frühzeitigen Freigabe des Schwenkens der Behälterklappe bei in der geöffneten Position befindlichem Blockierelement erfolgen, so dass eine schnelle, gleichmäßige und vollständige Entladung des Ladegutbehälters möglich ist.

In einer weiteren möglichen Ausgestaltung der Vorrichtung umfasst diese ein Anschlagelement zur Begrenzung der Schwenkbewegung des Verriegelungshakens in dem geöffneten Zustand. Insbesondere wird ein vom Hebel nach dem Erreichen des Verriegelungshakens am Anschlagelement zurückgelegter Weg durch das Wegausgleichelement ausgeglichen, so dass ein Einsatz des Anschlagelements erst durch Verwendung des Wegausgleichelements ermöglicht ist. Durch die Begrenzung der Schwenkbewegung des Verriegelungshakens kann ein Freiraum zum Schwenken desselben minimiert werden, woraus auch bei kleinen Bauräumen ein Einsatz der Vorrichtung möglich ist.

In einer weiteren möglichen Ausgestaltung der Vorrichtung ist zwischen dem Verriegelungshaken und dem Hebel oder der Kippachse ein Spannschloss angeordnet. Dieses Spannschloss ermöglicht einen fertigungs- und montagebedingten Toleranzausgleich einer Länge zwischen dem Verriegelungshaken und dem Hebel, so dass stets eine einwandfreie Funktion der Vorrichtung sichergestellt ist. Auch ist mittels des Spannschlosses eine Verwendung der Vorrichtung in unterschiedlichen Einbaupositionen und Einbausituationen für verschiedene Ladegutbehälter und/oder Fahrzeuge möglich.

Alternativ oder zusätzlich umfasst in einer weiteren möglichen Ausgestaltung der Vorrichtung der Hebel ein Spannschloss. Auch ein solches Spannschloss ermöglicht einen fertigungs- und montagebedingten Toleranzausgleich einer Länge zwischen dem Verriegelungshaken und dem Hebel, so dass stets eine einwandfreie Funktion der Vorrichtung sichergestellt ist. Auch ist mittels des Spannschlosses eine Verwendung der Vorrichtung in unterschiedlichen Einbaupositionen und Einbausituationen für verschiedene Ladegutbehälter und/oder Fahrzeuge möglich.

Alternativ oder zusätzlich umfasst in einer weiteren möglichen Ausgestaltung der Vorrichtung der Verriegelungshaken ein Spannschloss. Auch ein solches Spannschloss ermöglicht einen fertigungs- und montagebedingten Toleranzausgleich einer Länge zwischen dem Verriegelungshaken und dem Hebel oder der Kippachse, so dass stets eine einwandfreie Funktion der Vorrichtung sichergestellt ist. Auch ist mittels des Spannschlosses eine Verwendung der Vorrichtung in unterschiedlichen Einbaupositionen und Einbausituationen für verschiedene Ladegutbehälter und/oder Fahrzeuge möglich.

Alternativ oder zusätzlich umfasst in einer weiteren möglichen Ausgestaltung der Vorrichtung das Wegausgleichelement ein Spannschloss. Auch ein solches Spannschloss ermöglicht einen fertigungs- und montagebedingten Toleranzausgleich einer Länge zwischen dem Verriegelungshaken und dem Hebel oder der Kippachse, so dass stets eine einwandfreie Funktion der Vorrichtung sichergestellt ist. Auch ist mittels des Spannschlosses eine Verwendung der Vorrichtung in unterschiedlichen Einbaupositionen und Einbausituationen für verschiedene Ladegutbehälter und/oder Fahrzeuge möglich.

Der erfindungsgemäße Ladegutbehälter für ein Fahrzeug, beispielsweise eine Kippmulde für ein Fahrzeug, umfasst einen Behälterkörper, welcher zumindest eine Behälteröffnung aufweist. Weiterhin umfasst der Ladegutbehälter zumindest eine pendelnd gelagerte und in einer geschlossenen Position die Behälteröffnung verschließende Behälterklappe sowie eine zuvor beschriebene Vorrichtung zur Verriegelung der Behälterklappe.

Die Verwendung der Vorrichtung an dem Ladegutbehälter ermöglicht in einfacher und zuverlässiger Weise, dass bei einem Kippvorgang des Ladegutbehälters ein Öffnen des Verriegelungshakens derart gesperrt werden kann, dass die Behälterklappe trotz gekippter Position vom Verriegelungshaken verriegelt ist. Eine zusätzliche Verriegelung ist dabei nicht erforderlich, woraus eine signifikante Material- und Kosteneinsparung resultiert. Dabei ist eine Entladung des Ladegutbehälters durch eine Öffnung, welche nicht von der Behälterklappe verschlossen ist, möglich. Eine solche Öffnung ist beispielsweise eine in der Behälterklappe selbst befindliche und von einem anderen Verschlusselement verschlossene Öffnung, beispielsweise ein so genannter Getreideschieber. Hierbei ermöglicht der Aufbau der Vorrichtung mit dem Wegausgleichelement, dass die Vorrichtung vollständig am Ladegutbehälter befestigt ist. Eine Befestigung an einem den Ladegutbehälter tragenden Chassis oder Rahmen ist nicht erforderlich. Somit kann die Vorrichtung sehr kleinbauend mit geringer Länge, insbesondere in einen Bereich zwischen Kippachse und unterem Ende der Behälterklappe, angeordnet werden.

Das erfindungsgemäße Fahrzeug umfasst einen zuvor beschriebenen Ladegutbehälter mit den ebenfalls zuvor beschriebenen Vorteilen.

Ausführungsbeispiele der Erfindung werden im Folgenden anhand von Zeichnungen näher erläutert.

Darin zeigen:
- Figur 1: schematisch eine Seitenansicht eines Ausschnitts eines Ladegutbehälters in einer ungekippten Position,
- Figur 2: schematisch eine Draufsicht eines Ausschnitts des Ladegutbehälters gemäß Figur 1 in der ungekippten Position im Bereich eines in einer Blockierposition befindlichen Blockierelements,
- Figur 3: schematisch eine Draufsicht des Ausschnitts gemäß Figur 2 mit in einer geöffneten Position befindlichem Blockierelement,
- Figur 4: schematisch eine Seitenansicht eines Ausschnitts des Ladegutbehälters gemäß Figur 1 in einer gekippten Position mit einem in einer Blockierposition befindlichen Blockierelement und
- Figur 5: schematisch eine Seitenansicht des Ausschnitts gemäß Figur 4 mit in geöffneter Position befindlichem Blockierelement.

Einander entsprechende Teile sind in allen Figuren mit den gleichen Bezugszeichen versehen.

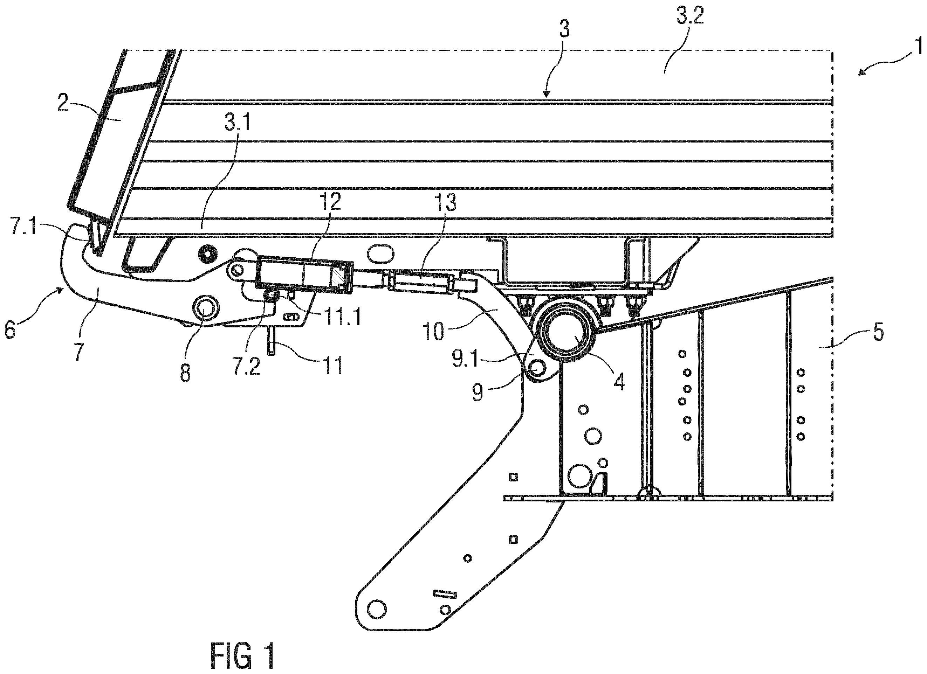

In **Figur** 1 ist eine Seitenansicht eines Ausschnitts eines Ladegutbehälters 1 für ein Fahrzeug in einer ungekippten Position dargestellt. Das Fahrzeug ist beispielsweise ein Anhänger oder Auflieger oder ein angetriebenes Fahrzeug mit einem solchen Ladegutbehälter 1.

Der Ladegutbehälter 1 ist als so genannte Kippmulde ausgebildet und umfasst eine als Heckklappe ausgebildeten Behälterklappe 2. Der Ladegutbehälter 1 umfasst weiterhin einen Behälterkörper 3 mit einem Behälterboden 3.1 und zwei gegenüberliegenden seitlichen Behälterwänden 3.2, welche vom Behälterboden 3.1 nach oben abragen. Weiterhin umfasst der Ladegutbehälter 1 eine der Behälterklappe 2 gegenüberliegende, die beiden seitlichen Behälterwände 3.2 verbindende Stirnwand, welche aufgrund des Ausschnitts jedoch nicht näher dargestellt ist.

Der Ladegutbehälter 1 ist derart gelagert, dass dieser um eine quer zur Längsausdehnung des Ladegutbehälters 1 angeordnete und an einem Rahmen 5 befestigte Kippachse 4, gekippt werden kann. Der Kippvorgang erfolgt dabei derart, dass eine Seite des Ladegutbehälters 1, an welchem sich die Stirnwand befindet, nach oben geführt wird und somit ein in dem Ladegutbehälter 1 befindliches Ladegut, insbesondere Schüttgut, aufgrund der Schwerkraft durch eine von der Behälterklappe 2 verschließbare und freigebbare Behälteröffnung entladen werden kann.

Zu dieser Freigabe der Behälteröffnung ist die Behälterklappe 2 mittels nicht näher dargestellter Pendellager um eine Klappenschwenkachse schwenkbar bzw. pendelnd gelagert und öffnet sich bei Überschreitung eines vorgegebenen Kippwinkels dann, wenn eine am Behälterboden 3.1 angeordnete und als Sicherheitssperre ausgebildete und zu einer Verriegelung der Behälterklappe 2 vorgesehene Vorrichtung 6 gelöst ist. Die Vorrichtung 6 verhindert im gesperrten Zustand, dass die Behälterklappe 2 sich ungewollt öffnet. Die Behälterschwenkachse verläuft dabei zumindest im Wesentlichen parallel zur Kippachse 4 des Ladegutbehälters 1. In einer möglichen Ausgestaltung des Ladegutbehälters 1 umfasst dieser mehrere solcher Vorrichtungen 6.

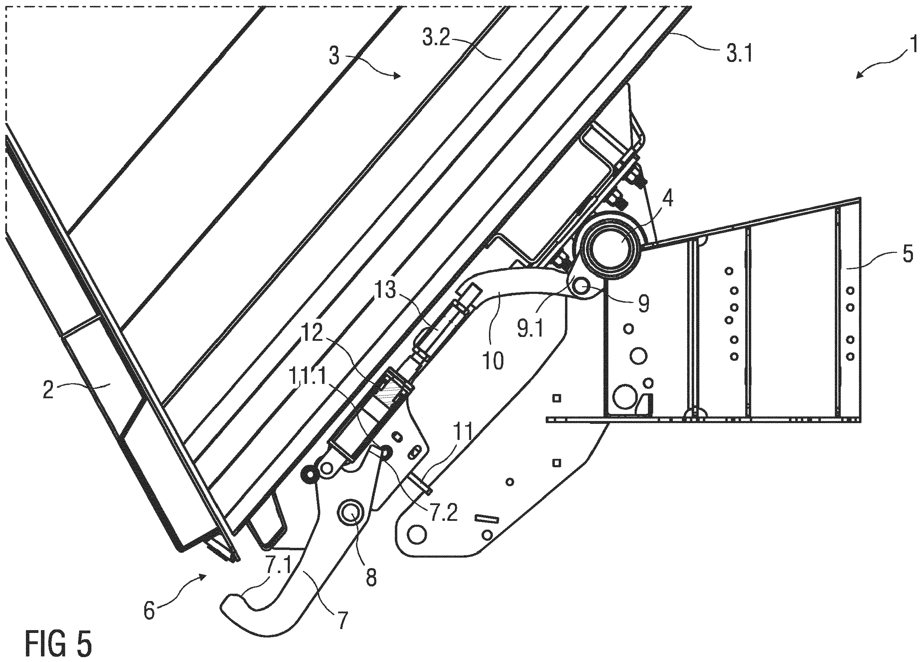

Die Vorrichtung 6 umfasst zumindest einen Verriegelungshaken 7, welcher schwenkbar um eine insbesondere parallel zur Kippachse 4 angeordnete Hakenschwenkachse 8 ausgebildet ist. Der Verriegelungshaken 7 weist einen Verriegelungsabschnitt 7.1 auf, welcher in einem dargestellten geschlossenen Zustand des Verriegelungshakens 7 zur Anlage an der Behälterklappe 2 ausgebildet ist und in einem in Figur 5 näher dargestellten geöffneten Zustand die Behälterklappe 2 zum Schwenken um die Klappenschwenkachse freigibt.

Weiterhin umfasst die Vorrichtung 6 einen um eine parallel zur Kippachse 4 verlaufende Hebelschwenkachse 9 schwenkbaren Hebel 10, wobei ein Aufnahmeelement 9.1 der Hebelschwenkachse an der Kippachse 4 des Ladegutbehälters 1 befestigt ist.

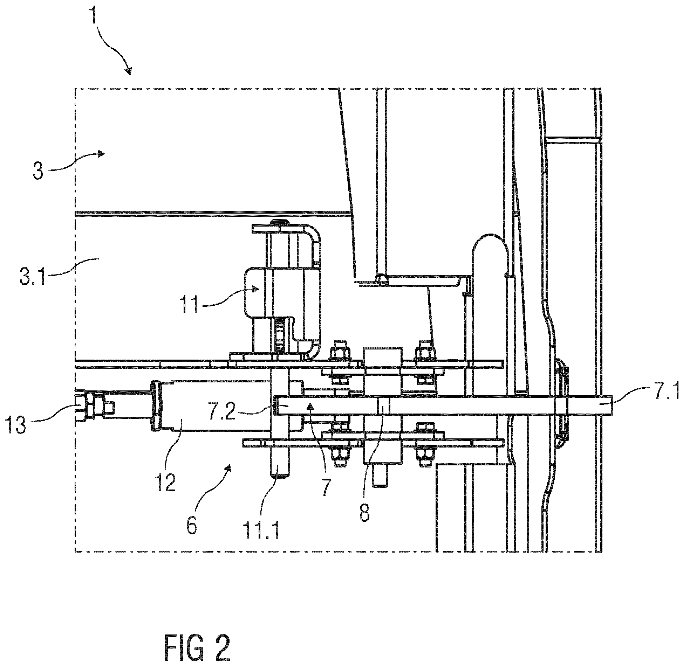

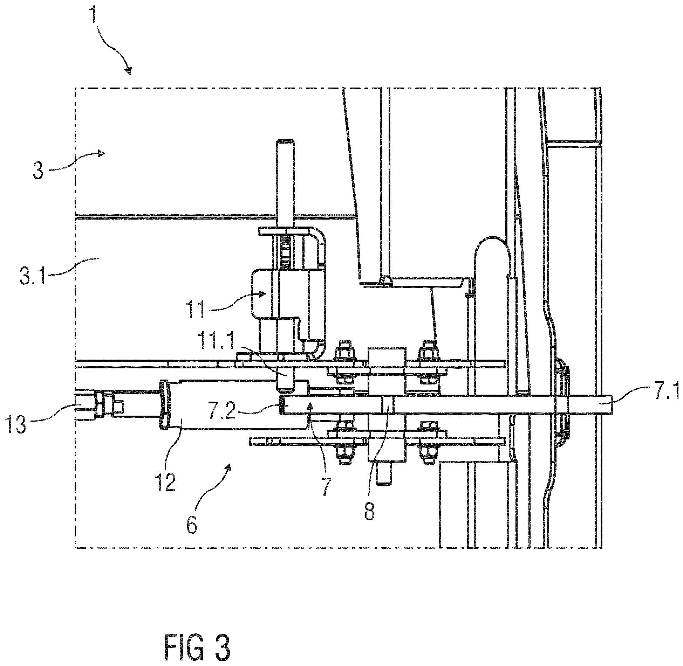

Ferner umfasst die Vorrichtung 6 ein Blockierelement 11, welches in einer in Figur 2 näher dargestellten Blockierposition den Verriegelungshaken 7 in seinem geschlossenen Zustand blockiert und in einer in Figur 3 näher dargestellten geöffneten Position den Verriegelungshaken 7 zum Schwenken um die Hakenschwenkachse 8 freigibt. Das Blockierelement 11 ist dabei manuell, motorisch, pneumatisch und/oder hydraulisch bedienbar. Die motorische, pneumatische und/oder hydraulische Bedienung kann zusätzlich auch automatisch erfolgen.

Zusätzlich umfasst die Vorrichtung 6 ein Wegausgleichelement 12, welches ein der Hebelschwenkachse 9 abgewandtes Ende des Hebels 10 und den Verriegelungshaken 7 verbindet. Alternativ ist das Wegausgleichelement 12 Bestandteil des Hebels 10 und zwischen einem hebelachsseitigen Ende und dem der Hebelschwenkachse 9 abgewandten Ende des Hebels 10 angeordnet. In einer nicht näher dargestellten möglichen Ausgestaltung der Vorrichtung ist kein Hebel 10 vorgesehen, wobei das Wegausgleichelement 12 den Verriegelungshaken 7 mittelbar oder unmittelbar mit der Kippachse 4 verbindet.

Ferner umfasst die Vorrichtung 6 ein zwischen dem Wegausgleichelement 12 und dem Hebel 10 angeordnetes Spannschloss 13, mittels welchem eine Länge zwischen dem Verriegelungshaken 7 und dem Hebel 10 einstellbar ist und welches somit einen fertigungs- und montagebedingten Toleranzausgleich und eine Verwendung der Vorrichtung 6 bei verschiedenen Einbausituationen ermöglicht. Alternativ oder zusätzlich können bzw. kann in nicht näher dargestellter Weise auch der Hebel 10 selbst und/oder der Verriegelungshaken 7 und/oder das Wegausgleichelement 12 ein solches Spannschloss 13 umfassen.

Die Vorrichtung 6 ist derart ausgebildet, dass bei einem Kippen des Ladegutbehälters 1 aus der dargestellten ungekippten Position in eine in Figur 5 dargestellte gekippte Position der Hebel 10 aufgrund einer Kopplung mit einem nicht näher dargestellten Führungselement eine Schwenkbewegung um die Hebelschwenkachse 9 ausführt und somit über das Spannschloss 13 und das Wegausgleichelement 12 bei geöffnetem Blockierelement 11 den Verriegelungshaken 7 derart um die Hakenschwenkachse 8 schwenkt, dass dieser öffnet und so die Behälterklappe 2 zum Schwenken freigibt.

Es existieren jedoch verschiedene Situationen, in welchen ein solches Öffnen der Behälterklappe 2 beim Kippen des Ladegutbehälters 1 vermieden werden muss. Dies ist beispielsweise dann der Fall, wenn die Behälterklappe 2 beispielsweise eine mit einem Verschlusselement verschlossene Öffnung, beispielsweise einen so genannten Getreideschieber, umfasst, über welche ein Ladegut entladen werden soll.

Um dies zu erreichen wird das Blockierelement 11 vor dem Kippen manuell oder automatisch in seine Blockierposition überführt oder verbleibt in dieser. Beim Kippen muss jedoch der von dem Hebel 10 zurückgelegte Weg ausgeglichen werden, was durch das Wegausgleichelement 12 erfolgt.

Hierzu umfasst das Wegausgleichelement 12 beispielsweise eine Feder, welche den vom Hebel 10 ausgeführten Weg und eine dabei erzeugte Kraft zu einer Überführung in einen gespannten Zustand aufnimmt. Dabei ist die Feder mechanisch, hydraulisch und/oder pneumatisch ausgebildet. In einer möglichen Ausgestaltung ist die Feder in der ungekippten Position des Ladegutbehälters 1 auf Zug belastet und in der gekippten Position des Ladegutbehälters 1 zumindest bei in der Blockierposition befindlichem Blockierelement 11 auf Druck belastet. Bei der Ausführung, in welcher das Wegausgleichelement 12 ein Spannschloss 13 umfasst, ist dieses Spannschloss 13 mittelbar, beispielsweise über eine auf die Feder des Wegausgleichelements 12 wirkende Kolbenstange, oder unmittelbar mit der Feder gekoppelt.

**Figur 2** zeigt eine Draufsicht eines Ausschnitts des Ladegutbehälters 1 gemäß Figur 1 in der ungekippten Position im Bereich des in der Blockierposition befindlichen Blockierelements 11.

Das Blockierelement 11 umfasst im dargestellten Ausführungsbeispiel einen verschiebbaren Bolzenabschnitt 11.1, welcher in der Blockierposition in mechanischem Eingriff mit einem Blockierabschnitt 7.2 des Verriegelungshakens 7 steht und somit ein Schwenken desselben um die Hakenschwenkachse 8 blockiert.

In **Figur 3** ist eine Draufsicht des Ausschnitts gemäß Figur 2 mit dem in geöffneter Position befindlichen Blockierelement 11 dargestellt. Hierbei ist der Bolzenabschnitt 11.1 derart verschoben, dass dieser nicht in mechanischem Eingriff mit dem Blockierabschnitt 7.2 des Verriegelungshakens 7 steht und somit ein Schwenken desselben um die Hakenschwenkachse 8 freigibt.

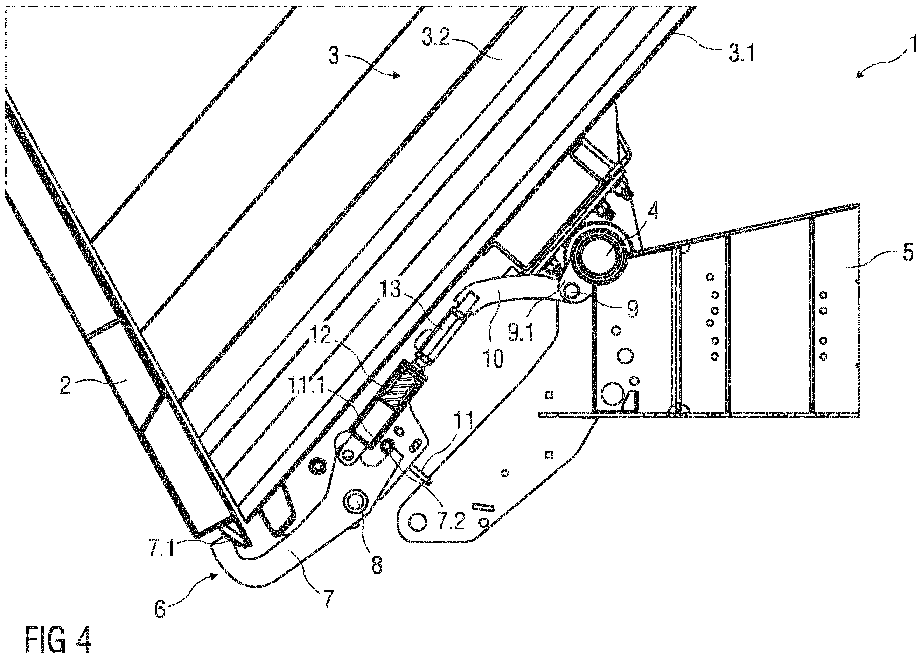

**Figur 4** zeigt eine Seitenansicht eines Ausschnitts des Ladegutbehälters 1 gemäß Figur 1 in einer gekippten Position mit dem in der Blockierposition befindlichen Blockierelement 11.

Hierbei ist verdeutlicht, dass das Wegausgleichelement 12 den vom Hebel 10 ausgeführten Weg und eine dabei erzeugte Kraft aufnimmt, so dass diese nicht auf den Verriegelungshaken 7 übertragen wird.

In **Figur 5** ist eine Seitenansicht des Ausschnitts gemäß Figur 4 mit in geöffneter Position befindlichem Blockierelement 11 dargestellt.

Hierbei führt beim Kippen des Ladegutbehälters 1 aus der in Figur 1 dargestellten ungekippten Position in die dargestellte gekippte Position der Hebel 10 aufgrund der Kopplung mit dem nicht näher dargestellten Führungselement die Schwenkbewegung um die Hebelschwenkachse 9 aus und öffnet somit über das Spannschloss 13 und das Wegausgleichelement 12 bei geöffnetem Blockierelement 11 den Verriegelungshaken 7. Somit ist die Behälterklappe 2 zum Schwenken freigegeben.

In einer möglichen Ausgestaltung der Vorrichtung 6 umfasst diese ein nicht näher dargestelltes Anschlagelement zur Begrenzung der Schwenkbewegung des Verriegelungshakens 7. Wie im Vergleich zu Figur 1 dargestellt, wird ein vom Hebel 10 nach dem Erreichen des Verriegelungshakens 7 am Anschlagelement zurückgelegter Weg durch das Wegausgleichelement 12 ausgeglichen.

### BEZUGSZEICHENLISTE

- 1: Ladegutbehälter
- 2: Behälterklappe
- 3: Behälterkörper
- 3.1: Behälterboden
- 3.2: Wand
- 4: Kippachse
- 5: Rahmen
- 6: Vorrichtung
- 7: Verriegelungshaken
- 7.1: Verriegelungsabschnitt
- 7.2: Blockierabschnitt
- 8: Hakenschwenkachse
- 9: Hebelschwenkachse
- 9.1: Aufnahmeelement
- 10: Hebel
- 11: Blockierelement
- 11.1: Bolzenabschnitt
- 12: Wegausgleichelement
- 13: Spannschloss

## Patentansprüche

1. Vorrichtung (6) zur Verriegelung einer Behälterklappe (2) an einem um eine Kippachse (4) kippbaren Ladegutbehälter (1) für ein Fahrzeug mit
- zumindest einem Verriegelungshaken (7), welcher schwenkbar um eine Hakenschwenkachse (8) ausgebildet ist, und einen Verriegelungsabschnitt (7.1) aufweist, welcher in einem geschlossenen Zustand des Verriegelungshakens (7) zur Anlage an der Behälterklappe (2) ausgebildet ist und in einem geöffneten Zustand die Behälterklappe (2) zu einem Schwenken freigibt,
- einem Blockierelement (11), welches in einer Blockierposition den Verriegelungshaken (7) in seinem geschlossenen Zustand blockiert und in einer geöffneten Position den Verriegelungshaken (7) zum Schwenken um die Hakenschwenkachse (8) freigibt, **gekennzeichnet durch**
- einem Wegausgleichelement (12), welches die Kippachse (4) und den Verriegelungshaken (7) mittelbar oder unmittelbar derart verbindet, dass bei einem Kippen des Ladegutbehälters (1) aus einer ungekippten Position in eine gekippte Position und
- bei in der geöffneten Position befindlichem Blockierelement (11) ein von der Kippachse (4) ausgeführter Weg derart auf den Verriegelungshaken (7) übertragen wird, dass dieser öffnet, und
- bei in der Blockierposition befindlichem Blockierelement (11) der von der Kippachse (4) ausgeführte Weg vom Wegausgleichelement (12) ausgeglichen wird.

2. Vorrichtung (6) nach Anspruch 1, umfassend zumindest einen um eine parallel zur Kippachse (4) verlaufende Hebelschwenkachse (9) schwenkbaren Hebel (10), wobei ein Aufnahmeelement der Hebelschwenkachse (9) an der Kippachse (4) des Ladegutbehälters (1) befestigt ist.

3. Vorrichtung (6) nach Anspruch 2, wobei das Wegausgleichelement (12) ein der Hebelschwenkachse (9) abgewandtes Ende des Hebels (10) und den Verriegelungshaken (7) verbindet.

4. Vorrichtung (6) nach Anspruch 2, wobei das Wegausgleichelement (12) Bestandteil des Hebels (10) ist und zwischen einem hebelachsseitigen Ende und einem der Hebelschwenkachse (9) abgewandten Ende des Hebels (10) angeordnet ist.

5. Vorrichtung (6) nach einem der vorhergehenden Ansprüche, wobei das Wegausgleichelement (12) zumindest eine Feder umfasst, welche den von der Kippachse (4) ausgeführten Weg und eine dabei erzeugte Kraft zu einer Überführung in einen gespannten Zustand aufnimmt.

6. Vorrichtung (6) nach Anspruch 5, wobei die Feder mechanisch, hydraulisch und/oder pneumatisch ausgebildet ist.

7. Vorrichtung (6) nach Anspruch 5 oder 6, wobei die Feder in der ungekippten Position des Ladegutbehälters (1) auf Zug belastet und in der gekippten Position des Ladegutbehälters (1) zumindest bei in der Blockierposition befindlichem Blockierelement (11) auf Druck belastet ist.

8. Vorrichtung (6) nach einem der Ansprüche 2 bis 7, wobei der Hebel (10) mechanisch mit einem Führungselement gekoppelt ist, welches bei dem Kippen des Ladegutbehälters (1) ein Schwenken des Hebels (10) um die Hebelschwenkachse (9) bewirkt.

9. Vorrichtung (6) nach einem der vorhergehenden Ansprüche, umfassend ein Anschlagelement zur Begrenzung der Schwenkbewegung des Verriegelungshakens (7) in dem geöffneten Zustand.

10. Vorrichtung (6) nach einem der vorhergehenden Ansprüche, wobei zwischen dem Verriegelungshaken (7) und der Kippachse (4) ein Spannschloss (13) angeordnet ist.

11. Vorrichtung (6) nach einem der Ansprüche 2 bis 10, wobei der Hebel (10) ein Spannschloss (13) umfasst.

12. Vorrichtung (6) nach einem der vorhergehenden Ansprüche, wobei der Verriegelungshaken (7) ein Spannschloss (13) umfasst.

13. Vorrichtung (6) nach einem der vorhergehenden Ansprüche, wobei das Wegausgleichelement (12) ein Spannschloss (13) umfasst.

14. Ladegutbehälter (1), insbesondere Kippmulde, für ein Fahrzeug mit
- einem Behälterkörper (3), welcher zumindest eine Behälteröffnung aufweist,
- zumindest einer pendelnd gelagerten und in einer geschlossenen Position die Behälteröffnung verschließenden Behälterklappe (2) und
- einer Vorrichtung (6) zur Verriegelung der Behälterklappe (2) nach einem der vorhergehenden Ansprüche.

15. Fahrzeug, umfassend einen Ladegutbehälter (1) nach Anspruch 14.

## Claims

1. Device (6) for locking a container flap (2) on a payload container (1) for a vehicle, wherein the payload container (1) is tiltable about a tilting pin (4), the device (6) having
- at least one uplock hook (7) which is configured so as to be pivotable about a hook swivel pin (8), and has a locking portion (7.1) which in a closed state of the uplock hook (7) is configured to bear on the container flap (2), and in an opened state releases the container flap (2) for pivoting;
- a blocking element (11) which in a blocking position blocks the uplock hook (7) in the closed state thereof, and in an opened position releases the uplock hook (7) for pivoting about the hook swivel pin (8),
**characterized by**
- a distance compensation element (12) which connects the tilting pin (4) and the uplock hook (7) indirectly or directly in such a manner that, when tilting the payload container (1) from a non-tilted position to a tilted position, and
- with the blocking element (11) situated in the opened position, a distance travelled by the tilting pin (4) is transmitted to the uplock hook (7) in such a manner that the latter opens, and
- with the blocking element (11) situated in the blocking position, the distance travelled by the tilting pin (4) is compensated for by the distance compensation element (12).

2. Device (6) according to Claim 1, comprising at least one lever (10) which is pivotable about a lever swivel pin (9) that runs parallel to the tilting pin (4), wherein a receptacle element of the lever swivel pin (9) is fastened to the tilting pin (4) of the payload container (1).

3. Device (6) according to Claim 2, wherein the distance compensation element (12) connects an end of the lever (10) that faces away from the lever swivel pin (9) and the uplock hook (7).

4. Device (6) according to Claim 2, wherein the distance compensation element (12) is a component part of the lever (10) and is disposed between a lever pinproximal end and an end of the lever (10) that faces away from the lever swivel pin (9).

5. Device (6) according to one of the preceding claims, wherein the distance compensation element (12) comprises at least one spring which absorbs the distance travelled by the tilting pin (4), and a force generated in the process, in order to be transferred to a tensioned state.

6. Device (6) according to Claim 5, wherein the spring is configured so as to be mechanical, hydraulic and/or pneumatic.

7. Device (6) according to Claim 5 or 6, wherein the spring in the non-tilted position of the payload container (1) is under tension, and in the tilted position of the payload container (1), at least with the blocking element (11) situated in the blocking position, is under compression.

8. Device (6) according to one of Claims 2 to 7, wherein the lever (10) is mechanically coupled to a guide element which when tilting the payload container (1) causes the lever (10) to pivot about the lever swivel pin (9).

9. Device (6) according to one of the preceding claims, comprising a stop element for delimiting the pivoting movement of the uplock hook (7) in the opened state.

10. Device (6) according to one of the preceding claims, wherein a turnbuckle (13) is disposed between the uplock hook (7) and the tilting pin (4).

11. Device (6) according to one of Claims 2 to 10, wherein the lever (10) comprises a turnbuckle (13).

12. Device (6) according to one of the preceding claims, wherein the uplock hook (7) comprises a turnbuckle (13) .

13. Device (6) according to one of the preceding claims, wherein the distance compensation element (12) comprises a turnbuckle (13).

14. Payload container (1), in particular dump body, for a vehicle, having
- a container body (3) which has at least one container opening;
- at least one pendulum-mounted container flap (2) which in a closed position closes the container opening; and
- a device (6) for locking the container flap (2), according to one of the preceding claims.

15. Vehicle, comprising a payload container (1) according to Claim 14.

## Revendications

1. Dispositif (6) permettant de verrouiller un clapet de conteneur (2) sur un conteneur de marchandises chargées (1), basculant sur un axe de basculement (4), pour un véhicule, comprenant
- au moins un crochet de verrouillage (7) qui est réalisé de manière à pouvoir pivoter sur un axe de pivotement de crochet (8) et présente une partie de verrouillage (7.1) qui, dans un état fermé du crochet de verrouillage (7), est réalisée pour être adjacente au clapet de conteneur (2), et qui, dans un état ouvert, libère le clapet de conteneur (2) en vue d'un pivotement,
- un élément de blocage (11) qui, dans une position de blocage, bloque le crochet de verrouillage (7) dans son état fermé, et dans une position ouverte, libère le crochet de verrouillage (7) en vue d'un pivotement sur l'axe de pivotement de crochet (8),
**caractérisé par**
- un élément de compensation de course (12) qui relie l'axe de basculement (4) et le crochet de verrouillage (7) indirectement ou directement de telle sorte que lors d'un basculement du conteneur de marchandises chargées (1) d'une position non basculée à une position basculée, et
- lorsque l'élément de blocage (11) se trouve dans la position ouverte, une course effectuée par l'axe de basculement (4) est transmise au crochet de verrouillage (7) de telle sorte que celui-ci s'ouvre, et
- lorsque l'élément de blocage (11) se trouve dans la position de blocage, la course effectuée par l'axe de basculement (4) est compensée par l'élément de compensation de course (12).

2. Dispositif (6) selon la revendication 1, comprenant au moins un levier (10) pivotant sur un axe de pivotement de levier (9) s'étendant en parallèle à l'axe de pivotement (4), dans lequel un élément de réception de l'axe de pivotement de levier (9) est fixé à l'axe de pivotement (4) du conteneur de marchandises chargées (1).

3. Dispositif (6) selon la revendication 2, dans lequel l'élément de compensation de course (12) relie une extrémité du levier (10), détournée de l'axe de pivotement de levier (9), et le crochet de verrouillage (7).

4. Dispositif (6) selon la revendication 2, dans lequel l'élément de compensation de course (12) fait partie du levier (10) et est disposé entre une extrémité côté axe de levier et une extrémité du levier (10), détournée de l'axe de pivotement de levier (9).

5. Dispositif (6) selon l'une quelconque des revendications précédentes, dans lequel l'élément de compensation de course (12) comprend au moins un ressort qui absorbe la course effectuée par l'axe de basculement (4) et une force générée de ce fait en vue d'un transfert à un état tendu.

6. Dispositif (6) selon la revendication 5, dans lequel le ressort est réalisé de manière mécanique, hydraulique et/ou pneumatique.

7. Dispositif (6) selon la revendication 5 ou 6, dans lequel le ressort est sollicité en traction dans la position non basculée du conteneur de marchandises chargées (1), et est sollicité en pression dans la position basculée du conteneur de marchandises chargées (1), au moins lorsque l'élément de blocage (11) se trouve dans la position de blocage.

8. Dispositif (6) selon l'une quelconque des revendications 2 à 7, dans lequel le levier (10) est couplé mécaniquement à un élément de guidage qui provoque un pivotement du levier (10) sur l'axe de pivotement de levier (9) lors du basculement du conteneur de marchandises chargées (1).

9. Dispositif (6) selon l'une quelconque des revendications précédentes, comprenant un élément de butée pour limiter le mouvement pivotant du crochet de verrouillage (7) à l'état ouvert.

10. Dispositif (6) selon l'une quelconque des revendications précédentes, dans lequel un ridoir à vis (13) est disposé entre le crochet de verrouillage (7) et l'axe de basculement (4).

11. Dispositif (6) selon l'une quelconque des revendications 2 à 10, dans lequel le levier (10) comprend un ridoir à vis (13).

12. Dispositif (6) selon l'une quelconque des revendications précédentes, dans lequel le crochet de verrouillage (7) comprend un ridoir à vis (13).

13. Dispositif (6) selon l'une quelconque des revendications précédentes, dans lequel l'élément de compensation de course (12) comprend un ridoir à vis (13).

14. Conteneur de marchandises chargées (1), en particulier benne basculante, pour un véhicule, comprenant
- un corps de conteneur (3) qui présente au moins une ouverture de conteneur,
- au moins un clapet de conteneur (2) monté oscillant et fermant l'ouverture de conteneur dans une position fermée, et
- un dispositif (6) permettant de verrouiller le clapet de conteneur (2) selon l'une quelconque des revendications précédentes.

15. Véhicule, comprenant un conteneur de marchandises chargées (1) selon la revendication 14.
